# EUROPEAN PATENT APPLICATION

(11) **EP 2 883 595 A1**
(43) Date of publication of application: **17.06.2015**
(21) Application number: 13828275.1
(22) Date of filing: 02.08.2013
(51) Int. Cl.: B01D 53/62, B01D 53/14, C01B 31/20

(54) **EXHAUST GAS TREATMENT SYSTEM**

(30) Priority: 09.08.2012 US 201213571001
(71) Applicant: Mitsubishi Heavy Industries, Ltd., Tokyo 108-8215 (JP)
(72) Inventor: TSUJIUCHI, Tatsuya, New York, New York 10111 (US); HONJO, Shintaro, New York, New York 10111 (US); YONEKAWA, Takahito, New York, New York 10111 (US); SUGITA, Satoru, New York, New York 10111 (US); ITO, Motofumi, New York, New York 10111 (US); WU, Tiffany, New York, New York 10111 (US); KAMIJO, Takashi, Tokyo 108-8215 (JP); NAGAYASU, Tatsuto, Tokyo 108-8215 (JP); OKAMOTO, Takuya, Tokyo 108-8215 (JP)
(74) Representative: Bongiovanni, Simone
(86) International application number: PCT/JP2013/070996
(87) International publication number: WO 2014/024791

(57) **Abstract**

There is provided an exhaust gas treatment system including a CO₂ recovery unit with further enhanced energy efficiency. An exhaust gas treatment system (1) of the present invention includes: a CO₂ recovery unit (10) including a CO₂ absorption column (11), an absorbing solution regeneration column (16), and a reboiler (21); and an exhaust gas heat exchanger (5) provided on a gas upstream side of the CO₂ recovery unit (10). Heat exchange is performed between process condensate discharged from the CO₂ absorption column (11) and steam condensate discharged from the reboiler (21) in a heat exchanger (22). The heated process condensate is fed to the absorbing solution regeneration column (16). Heat exchange is performed between the cooled steam condensate and exhaust gas in the exhaust gas heat exchanger (5) so that the steam condensate is heated while the exhaust gas is cooled.

## Description

### {Technical Field}

The present invention relates to an exhaust gas treatment system having a carbon dioxide (CO₂) recovery unit placed for removing CO₂ from exhaust gas.

### {Background Art}

In thermal power systems for generating power by combusting fossil fuels such as coal and heavy fuel, a large amount of CO₂ is discharged. In recent years, the greenhouse effect by CO₂ is pointed out as one of the causes of the global warming. It is necessary, therefore, to take prompt measures to protect the global environment on an international basis. Under these circumstances, there is a trend toward further increase in demand for CO₂ discharge control.

In the thermal power systems, there is installed an exhaust gas treatment system including a CO₂ recovery unit placed in a flow passage on the downstream side of a boiler. The CO₂ recovery unit includes a CO₂ absorption column and a CO₂ regeneration column as described in Patent Literature 1 and Patent Literature 2. In the CO₂ absorption column, combustion exhaust gas from the boiler is brought into contact with an amine CO₂ absorbing solution to remove CO₂ in the combustion exhaust gas. The absorbing solution which absorbed CO₂ is conveyed to the regeneration column. In the regeneration column, the absorbing solution which absorbed CO₂ is heated, and CO₂ is released from the absorbing solution. As a result, the absorbing solution is regenerated. The absorbing solution regenerated in the regeneration column is circulated to the CO₂ absorption column and is reused therein. The CO₂ recovered from the combustion exhaust gas by the CO₂ recovery unit is stored without being released to the air or is used for Enhanced Oil Recovery (EOR) and the like.

Since the CO₂ recovery unit is placed as an additional structure of a combustion facility, it is also necessary to minimize its operating cost. In the step of regenerating the absorbing solution in particular, a large amount of thermal energy is consumed. Therefore, the regenerating process needs to be energy-saving as much as possible.

In the exhaust gas treatment system in Patent Literature 1, a part of an absorbing solution which was extracted through a bottom portion of the CO₂ absorption column and supplied to the CO₂ regeneration column is preheated through heat exchange with vapor of a reboiler of the CO₂ regeneration column, before heat exchange is performed between the absorbing solution and a regenerated absorbing solution which was extracted through a bottom portion of the regeneration column and supplied to the CO₂ absorption column. With such a structure, sensible heat of the absorbing solution in the regeneration column increases, so that the vapor amount fed to a CO₂ removal facility is reduced.

In the thermal power system in Patent Literature 2, the amount of heat recovered by cooling the exhaust gas discharged from the boiler is used to heat an absorbing solution which absorbed CO₂ and which is supplied from the CO₂ absorption column to the regeneration column. Moreover, condensate water from a condenser which returns water vapor sent from a turbine to water is used to cool washing water for use in collection of the absorbing solution in the CO₂ absorption column, while the condensate water is also used to cool CO₂ separated in the regeneration column.

### {Citation List}

### {Patent Literature}

{PTL 1}
   Japanese patent application publication No. 2011-240321 A
{PTL 2}
   Japanese patent application publication No. 2012-37180 A

### {Summary of Invention}

### {Technical Problem}

An object of the present invention is to provide an exhaust gas treatment system including a CO₂ recovery unit which considerably reduces a water vapor generation amount and further enhances energy efficiency in the system.

### {Solution to Problem}

One aspect of the present invention is an exhaust gas treatment system provided on a downstream side of a boiler which combusts fuel to heat water and generate water vapor, comprising: a CO₂ recovery unit including a CO₂ absorption column for bringing exhaust gas containing CO₂ generated in the boiler into contact with a CO₂ absorbing solution so that the CO₂ absorbing solution absorbs the CO₂ and thereby the CO₂ is removed out of the exhaust gas, an absorbing solution regeneration column for desorbing the CO₂ from the CO₂ absorbing solution which absorbed the CO₂ to regenerate the CO₂ absorbing solution, and a reboiler for heating the CO₂ absorbing solution discharged from the absorbing solution regeneration column with water vapor and feeding the vaporized CO₂ absorbing solution to the absorbing solution regeneration column; and an exhaust gas heat exchanger provided on a gas upstream side of the CO₂ recovery unit, wherein the water vapor is supplied from the boiler to the reboiler, where heat exchange is performed between the CO₂ absorbing solution and the water vapor so that the water vapor is cooled into steam condensate, heat exchange is performed between the CO₂ absorbing solution discharged from the CO₂ absorption column and the steam condensate discharged from the reboiler in a heat exchanger so that the CO₂ absorbing solution is heated while the steam condensate is cooled, the CO₂ absorbing solution heated in the heat exchanger is fed to the absorbing solution regeneration column, and heat exchange is performed between the cooled steam condensate and the exhaust gas in the exhaust gas heat exchanger so that the steam condensate is heated while the exhaust gas is cooled.

In the exhaust gas treatment system, the CO₂ absorbing solution is preferably process condensate discharged from a water washing section in the CO₂ absorption column. Altanatively, in the exhaust gas treatment system, the CO₂ absorbing solution is preferably a solution discharged through a bottom portion of the CO₂ absorption column.

In this way, in the exhaust gas treatment system of the present invention, the process condensate and the CO₂ absorbing solution (rich solution) discharged from the bottom portion of the CO₂ absorption column are heated with the steam condensate discharged from the reboiler, and are supplied to the absorbing solution regeneration column. The steam condensate cooled through heat exchange with the CO₂ absorbing solution is reheated with use of the amount of heat of exhaust gas, so that the thermal efficiency of the entire system can be enhanced.

In the exhaust gas treatment system, it is preferable that heat exchange is performed between the CO₂ absorbing solution and the exhaust gas in the exhaust gas heat exchanger so that the CO₂ absorbing solution is heated while the exhaust gas is cooled, and that the heated CO₂ absorbing solution is supplied to the absorbing solution regeneration column.

Thus, the CO₂ absorbing solution (process condensate or rich solution) is heated with use of the amount of heat of the exhaust gas, so that the thermal efficiency can be further enhanced.

In the exhaust gas treatment system, the steam condensate heated in the exhaust gas heat exchanger is preferably supplied to the reboiler.

Through heating with use of the amount of heat of the exhaust gas, water vapor is generated from steam condensate. If this water vapor is supplied to the reboiler, the amount of water vapor, which should be supplied from an outside facility such as a boiler, can be decreased.

In the exhaust gas treatment system, the steam condensate heated in the exhaust gas heat exchanger is preferably supplied to the boiler.

With the above structure, boiler feed water can be fed to the boiler at temperature higher than conventional temperature, and the efficiency of the boiler can be enhanced thereby.

### {Advantageous Effects of Invention}

According to the present invention, the heat recovered from exhaust gas is used for CO₂ removal process and in the boiler. This makes it possible to enhance the thermal efficiency in the power generation system including the exhaust gas treatment system. At the same time, the removal efficiency of impurities in the exhaust gas can also be enhanced.

### {Brief Description of Drawings}

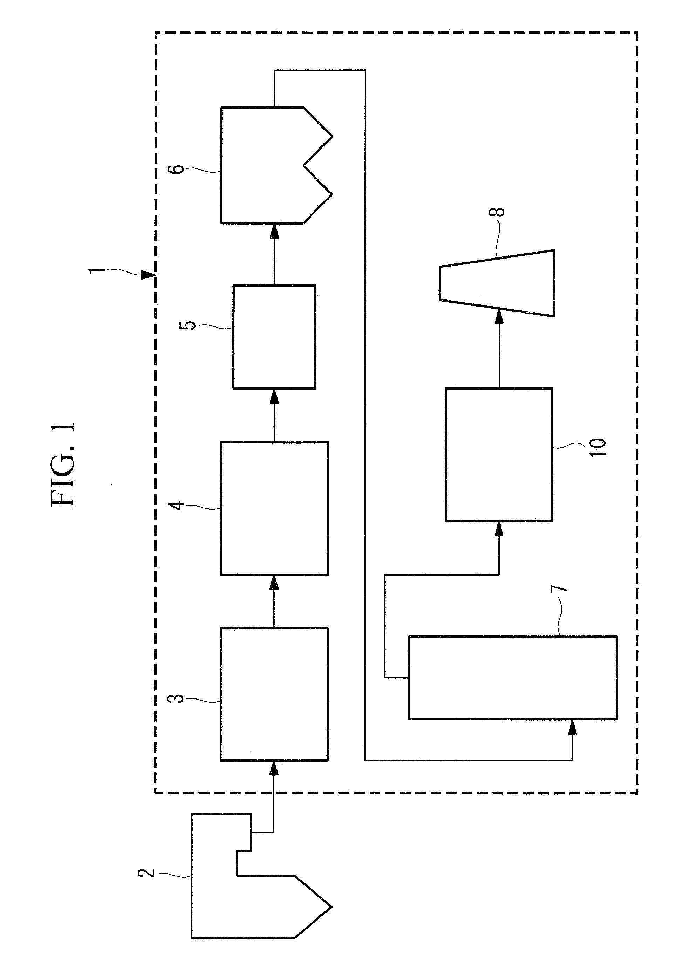

{Fig. 1}
   Fig. 1 is a schematic view of an exhaust gas treatment system.
{Fig. 2}
   Fig. 2 is a schematic view for explaining a CO₂ recovery unit in an exhaust gas treatment system according to a first embodiment.
{Fig. 3}
   Fig. 3 is a schematic view for explaining a CO₂ recovery unit in an exhaust gas treatment system according to a second embodiment.
{Fig. 4}
   Fig. 4 is a schematic view for explaining a CO₂ recovery unit in an exhaust gas treatment system according to a third embodiment.
{Fig. 5}
   Fig. 5 is a schematic view for explaining a CO₂ recovery unit in an exhaust gas treatment system according to a fourth embodiment.
{Fig. 6}
   Fig. 6 is a schematic view for explaining a CO₂ recovery unit in an exhaust gas treatment system according to a fifth embodiment.
{Fig. 7}
   Fig. 7 is a schematic view for explaining a CO₂ recovery unit in an exhaust gas treatment system of Comparative Example 1.

### {Description of Embodiments}

### <First Embodiment>

Fig. 1 is a schematic view of an exhaust gas treatment system according to a first embodiment. An exhaust gas treatment system 1 is placed on a downstream side of a combustion facility such as a boiler 2. Arrows in the drawing indicate the flow of an exhaust gas generated in the boiler 2. The exhaust gas treatment system 1 includes, in order from the gas upstream side, a NOx removal unit 3, an air heater 4, a dry electrostatic precipitator 6, a wet desulfurization unit 7, a *CO₂ recovery unit 10, and a smokestack 8. In the exhaust gas treatment system 1 of the first embodiment, an exhaust gas heat exchanger 5 is placed between the air heater 4 and the dry electrostatic precipitator 6. The exhaust gas heat exchanger 5 may be placed between the dry electrostatic precipitator 6 and the wet desulfurization unit 7.

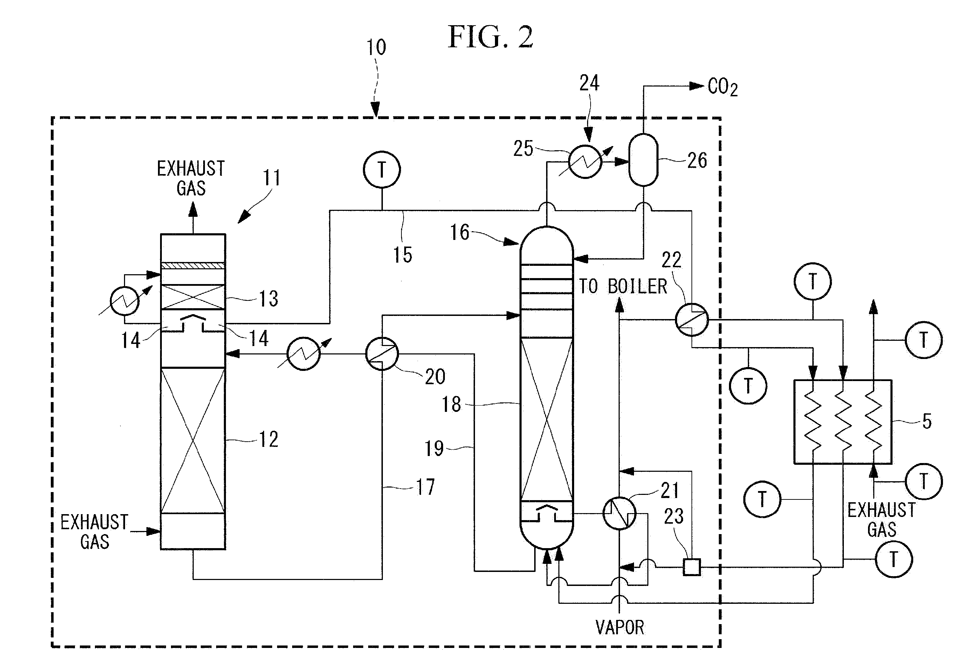

Fig. 2 is a schematic view for explaining the CO₂ recovery unit in the exhaust gas treatment system according to the first embodiment. The CO₂ recovery unit 10 of the first embodiment includes a CO₂ absorption column 11, an absorbing solution regeneration column 16, and a reboiler 21. Placed on the upstream side of the CO₂ absorption column 11 is an exhaust gas cooling unit (unshown), which cools the exhaust gas discharged from the combustion facility with cooling water.

The cooled exhaust gas containing CO₂ is supplied into the CO₂ absorption column 11 through a lower portion of the CO₂ absorption column 11. The CO₂ absorption column 11 is composed of a CO₂ recovery section 12 and a water washing section 13 in order from the gas upstream side.

In the CO₂ recovery section 12, a CO₂ absorbing solution is sprayed into the exhaust gas. The CO₂ absorbing solution has, for example, an amine solution as a base. Consequently, the exhaust gas and the CO₂ absorbing solution come into counter-current contact, and CO₂ in the exhaust gas is absorbed by the CO₂ absorbing solution due to a chemical reaction.

The exhaust gas with CO₂ removed is conveyed to the water washing section 13. Circulating cleaning water is sprayed into the exhaust gas from the upside of the water washing section 13. Accordingly, the exhaust gas and the circulating cleaning water come into gas-liquid contact, so that moisture contained in the exhaust gas is condensed and the condensed moisture is collected. The exhaust gas from which CO₂ and CO₂ absorbing solution removed is discharged to the outside of the system (the smokestack 8 of Fig. 1) through an upper portion of the CO₂ absorption column 11.

The moisture in the exhaust gas condensed in the water washing section 13 and the circulating cleaning water are collected in a tray 14 placed under the water washing section 13. A part of the collected liquid is sprayed in the water washing section 13 as circulating cleaning water. Another part of the collected liquid is discharged from the CO₂ absorption column 11 as process condensate and is supplied to a bottom portion of the absorbing solution regeneration column 16 through a condensate supply pipeline 15.

The CO₂ absorbing solution (rich solution) which absorbed CO₂ in the CO₂ recovery section 12 is stored in the lower portion of the CO₂ absorption column 11. The rich solution is discharged from the CO₂ absorption column 11 by a pump (unshown) and is supplied to an upper portion of the absorbing solution regeneration column 16 through a rich solution supply line 17.

A regenerating section 18 is provided in the inside of the absorbing solution regeneration column 16. Two or more regenerating sections 18 may be provided. The rich solution is sprayed to the inside of the absorbing solution regeneration column 16 from the upper portion of the regenerating section 18. Vapor is fed into the absorbing solution regeneration column 16 from the lower side of the regenerating section 18. In the regenerating section 18, the rich solution and the vapor come into gas-liquid contact, and a major part of CO₂ is released from the rich solution due to an endothermic reaction. By the time the CO₂ absorbing solution (semi-lean solution) with a part or a major part of CO₂ released therefrom reaches the bottom portion of the absorbing solution regeneration column 16, it is regenerated as a CO₂ absorbing solution (lean solution) with almost all CO₂ removed therefrom.

The CO₂ absorbing solution (lean solution and condensate) is stored in the bottom portion of the absorbing solution regeneration column 16. A part of the CO₂ absorbing solution stored in the bottom portion of the absorbing solution regeneration column 16 is conveyed to an upper portion of the CO₂ recovery section 12 in the CO₂ absorption column 11 through a lean solution supply line 19 by a pump (unshown), and is sprayed into the exhaust gas in the inside of the CO₂ absorption column 11. A rich/lean solution heat exchanger 20 is placed in the rich solution supply line 17 and the lean solution supply line 19. In the rich/lean solution heat exchanger 20, heat exchange is performed between the rich solution and the lean solution so that the rich solution is heated while the lean solution is cooled.

A part of the CO₂ absorbing solution stored in the bottom portion of the absorbing solution regeneration column 16 is supplied to the reboiler 21. Vapor from the boiler 2 is supplied to the reboiler 21. In a regenerative heater of the reboiler 21, heat exchange is performed between the CO₂ absorbing solution and the vapor from the boiler 2. As a consequence, the CO₂ absorbing solution changes into vapor and is supplied to the absorbing solution regeneration column 16. In contrast, the vapor is cooled into steam condensate and is discharged from the reboiler 21.

A part of the steam condensate discharged from the reboiler 21 is supplied to a heat exchanger 22. The remaining steam condensate is circulated to the boiler. In the heat exchanger 22, heat exchange is performed between the process condensate flowing through the condensate supply pipeline 15 and the steam condensate. As a consequence, the process condensate is heated while the steam condensate is cooled.

The process condensate and the steam condensate which exchanged heat in the heat exchanger 22 are supplied to the exhaust gas heat exchanger 5. In the exhaust gas heat exchanger 5, heat exchange is performed between the exhaust gas discharged from the boiler 2 and before flowing into the dry electrostatic precipitator 6, the process condensate, and the steam condensate. Accordingly, the exhaust gas is cooled and conveyed to the downstream side of the exhaust gas heat exchanger 5. The process condensate is heated and supplied to the bottom portion of the absorbing solution regeneration column 16.

The steam condensate is heated into a gas-liquid two phase flow through the above heat exchange and is divided into a gas phase and a liquid phase by a gas liquid separation unit 23. The gas phase (water vapor) is supplied to a vapor upstream side of the reboiler 21 and is mixed with vapor from the boiler 2, before being supplied to the reboiler 21. The liquid phase is supplied to a vapor downstream side of the reboiler 21, and is mixed with the steam condensate discharged from the reboiler 21. Thus, in the exhaust gas treatment system of the first embodiment, a part of vapor and steam condensate circulates between the reboiler 21 and the exhaust gas heat exchanger 5.

In the exhaust gas treatment system of the first embodiment, the process condensate in the CO₂ absorption column 11 of the CO₂ recovery unit 10 is managed in the temperature range from about 40 to 60°C. The process condensate discharged from the CO₂ absorption column at the above temperature range is heated to 70 to 100°C in the heat exchanger 22. The steam condensate discharged from the reboiler 21 is cooled to about 75 to 105°C in the heat exchanger 22.

In the exhaust gas treatment system of the first embodiment, the exhaust gas discharged from the boiler 2 is cooled to about 130 to 200°C by passing through the air heater 4, and the cooled exhaust gas flows into the exhaust gas heat exchanger 5. The exhaust gas is then cooled to 80 to 120°C by the heat exchange performed in the exhaust gas heat exchanger 5. In contrast, the process condensate is further heated to 120 to 160°C, and the steam condensate is heated to 120 to 190°C.

The temperature rise width of the process condensate and the temperature drop width of the steam condensate by the heat exchanger 22 are controlled with the flow rate of the process condensate and the flow rate of the vapor. The temperature rise width of the process condensate and the steam condensate and the temperature drop width of the exhaust gas by the exhaust gas heat exchanger 5 are controlled with the flow rate of the process condensate and the flow rate of the steam condensate.

The CO₂ desorbed from the CO₂ absorbing solution in the regenerating section of the absorbing solution regeneration column 16 is discharged from a top portion of the absorbing solution regeneration column 16 together with the water vapor released from the rich solution and the semi-lean solution, and is conveyed to a CO₂ separation section 24.

The CO₂ separation section 24 includes a condenser 25 and a separation drum 26. A mixture of water vapor and CO₂ is discharged from the absorbing solution regeneration column 16, and the water vapor is condensed in the condenser 25, and then water is separated in the separation drum 26. The CO₂ separated from water is released to the outside of the system. The released CO₂ is compressed by a compressor (unshown) and is recovered.

The water separated from CO₂ by the separation drum 26 is fed to the upper portion of the absorbing solution regeneration column 16 by a pump (unshown).

In the exhaust gas treatment system 1 of the present embodiment, the process condensate and the steam condensate are heated through heat exchange within the system, so that the thermal efficiency of the entire apparatus is enhanced. The enhanced thermal efficiency of the entire apparatus can decrease the amount of heat required for the reboiler. Since the steam condensate is reheated into vapor and is circulated to the reboiler 21, the amount of vapor fed to the reboiler 21 from the outside (boiler 2) can be decreased.

When the exhaust gas heat exchanger 5 is placed on the gas upstream side of the dry electrostatic precipitator 6, the aforementioned temperature of the exhaust gas cooled by the exhaust gas heat exchanger 5 becomes a dew point temperature of sulfur trioxide (SO₃) or below. Therefore, as the exhaust gas passes through the exhaust gas heat exchanger 5, the exhaust gas is cooled and SO₃ therein is condensed. A condensed SO₃ mist adheres to dust in the exhaust gas. The dust with SO₃ adhering thereto is collected by the dry electrostatic precipitator 6.

The exhaust gas contains heavy metals as vapor. As the heavy metals are cooled, they condense into solids. When the exhaust gas is cooled to about 150°C by the air heater 4, most parts of the heavy metals are condensed, but a part thereof is conveyed to the gas downstream side as vapor. As the exhaust gas is further cooled in the exhaust gas heat exchanger 5 placed on the gas downstream side of the air heater 4, almost all the heavy metals are condensed. The condensed heavy metals are mainly collected in the dry electrostatic precipitator 6.

When the exhaust gas heat exchanger is placed before the dry electrostatic precipitator 6 as in the above case, the removal rate of SO₃ and heavy metals are enhanced.

### <Second Embodiment>

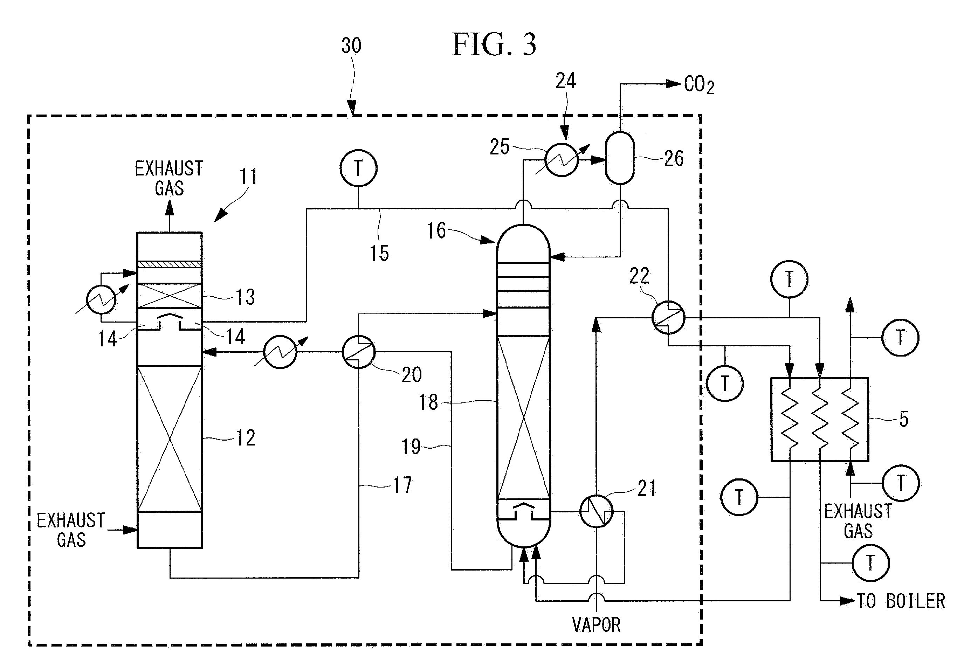

Fig. 3 is a schematic view for explaining a CO₂ recovery unit in an exhaust gas treatment system according to a second embodiment. In Fig. 3, structure components identical to those in Fig. 2 are designated by identical reference signs. The overall structure of the exhaust gas treatment system is identical to that of Fig. 1.

A CO₂ recovery unit 30 is different from that in the first embodiment in the point that all the steam condensate discharged from the reboiler 21 exchanges heat in the heat exchanger 22 and the exhaust gas heat exchanger 5 and then is circulated to the boiler 2.

As in the first embodiment, process condensate in the CO₂ absorption column 11 in the second embodiment is managed in the temperature range from about 40 to 60°C, and the process condensate is heated to 70 to 90°C by the heat exchanger 22. The steam condensate discharged from the reboiler 21 is cooled to about 75 to 105°C in the heat exchanger 22.

The exhaust gas cooled to about 130 to 200°C by the air heater 4 is cooled to 80 to 120°C through heat exchange in the exhaust gas heat exchanger 5. In contrast, the process condensate is further heated to 120 to 160°C, and the steam condensate is heated to 120 to 190°C.

Thus, in the exhaust gas treatment system 1 of the present embodiment, the amount of heat of the exhaust gas before flowing into the CO₂ recovery unit 10 is used to heat the process condensate and the steam condensate in the CO₂ recovery unit 10, so that the thermal efficiency of the entire apparatus is enhanced.

Adopting the structure of the second embodiment makes it possible to circulate the steam condensate having the gas phase and the liquid phase mixed therein to the boiler as boiler feed water. According to the present embodiment, boiler feed water can be fed to the boiler at temperature higher than conventional temperature, and the efficiency of the boiler can be enhanced thereby.

Also in the exhaust gas treatment system of the present embodiment, the exhaust gas heat exchanger 5 is placed on the gas upstream side of the dry electrostatic precipitator 6, so that the removal efficiency of SO₃ and the removal rate of heavy metals in the exhaust gas treatment system are also enhanced.

### <Third Embodiment>

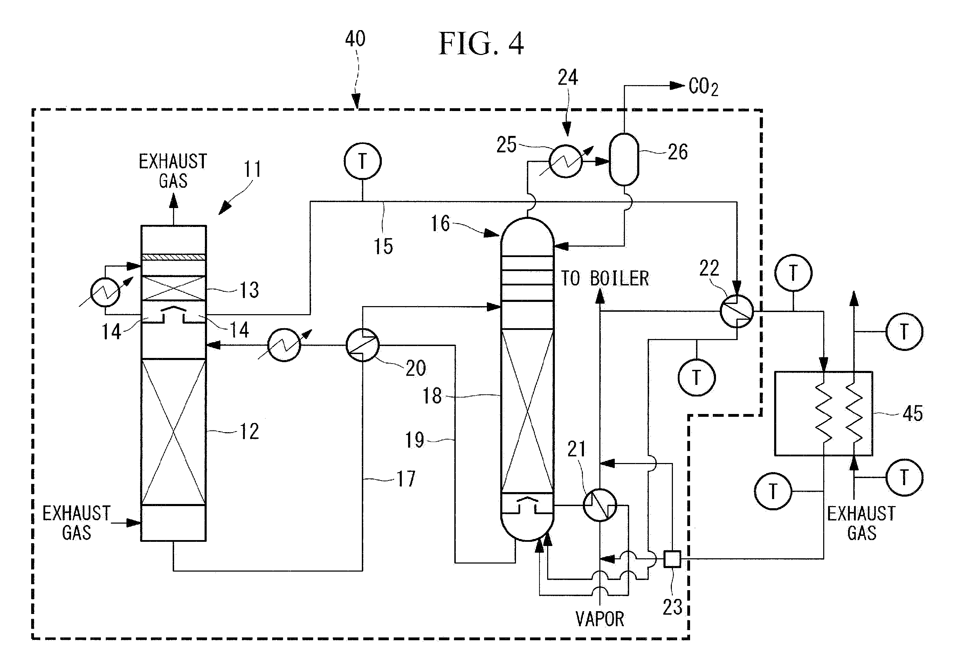

Fig. 4 is a schematic view for explaining a CO₂ recovery unit in an exhaust gas treatment system according to a third embodiment. In Fig. 4, structure components identical to those in Fig. 2 are designated by identical reference signs. The overall structure of the exhaust gas treatment system is identical to that of Fig. 1.

A CO₂ recovery unit 40 in the third embodiment is structured so that process condensate discharged from the tray 14 below the water washing section 13 of the CO₂ absorption column 11 exchanges heat with steam condensate in the heat exchanger 22, and then the process condensate is fed to the absorbing solution regeneration column 16 without passing through an exhaust gas heat exchanger 45. Other structure is similar to that in the first embodiment.

The process condensate in the CO₂ absorption column 11 in the second embodiment is managed in the temperature range from about 40 to 60°C, and the process condensate is heated to 70 to 100°C by the heat exchanger 22. The steam condensate discharged from the reboiler 21 is cooled to about 75 to 105°C in the heat exchanger 22.

The exhaust gas cooled to about 130 to 200°C by the air heater 4 is cooled to 80 to 120°C through heat exchange in the exhaust gas heat exchanger 45. In contrast, the steam condensate is heated to 120 to 190°C.

Since the exhaust gas treatment system 40 of the third embodiment uses the amount of heat of the exhaust gas to heat the steam condensate, the thermal efficiency of the entire apparatus is enhanced.

### <Fourth Embodiment>

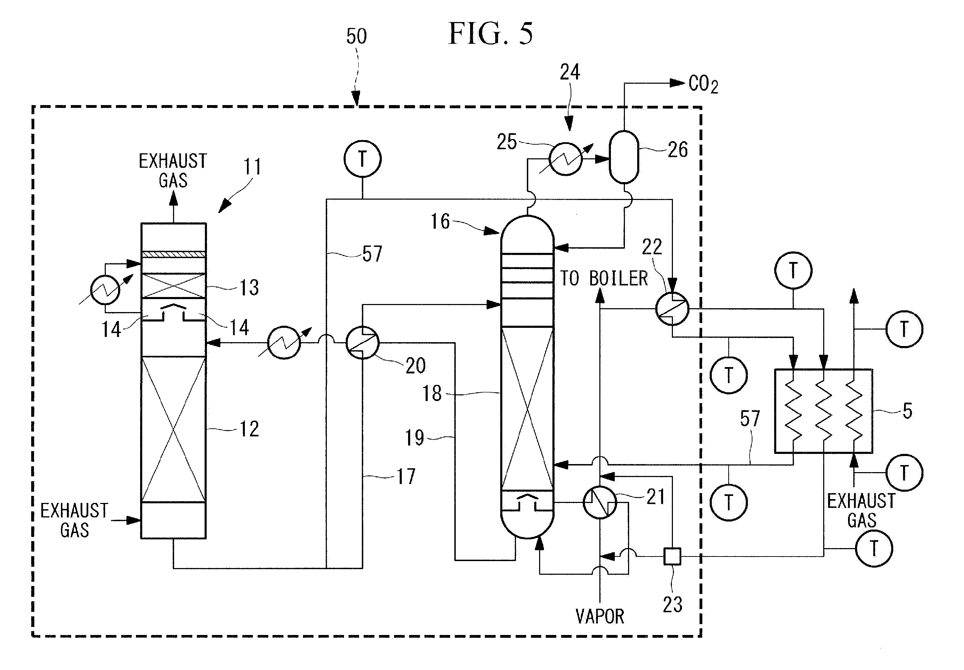

Fig. 5 is a schematic view for explaining a CO₂ recovery unit in an exhaust gas treatment system according to a fourth embodiment. In Fig. 5, structure components identical to those in Fig. 2 are designated by identical reference signs. The overall structure of the exhaust gas treatment system is identical to that of Fig. 1.

In a CO₂ recovery unit 50 of the fourth embodiment, a rich solution supply line branches into a rich solution supply line (first rich solution supply line) 17 and a rich solution supply line (second rich solution supply line) 57 on a rich solution upstream side of the rich/lean solution heat exchanger 20. A part of the rich solution discharged from the CO₂ absorption column 11 is supplied to the heat exchanger 22 and to the exhaust gas heat exchanger 5 through the rich solution supply line 57, before being supplied to the absorbing solution regeneration column 16.

In the heat exchanger 22, heat exchange is performed between the rich solution and the steam condensate. In the CO₂ recovery unit of the fourth embodiment, the rich solution stored in the bottom portion of the CO₂ absorption column 11 is managed in the temperature range from about 40 to 60°C. The rich solution discharged from the CO₂ absorption column 11 at this temperature range is conveyed to the heat exchanger 22 via the rich solution supply line 57, and is then heated to 70 to 100°C in the heat exchanger 22. In contrast, the steam condensate is cooled to about 75 to 105°C in the heat exchanger 22.

The rich solution and the steam condensate after heat exchange are supplied to the exhaust gas heat exchanger 5. In the exhaust gas heat exchanger 5, heat exchange is performed between the rich solution, the steam condensate and the exhaust gas, so that the rich solution and the steam condensate are heated while the exhaust gas is cooled. In the exhaust gas treatment system of the fourth embodiment, the exhaust gas discharged from the boiler 2 is cooled to about 130 to 200°C by passing through the air heater 4, and the cooled exhaust gas flows into the exhaust gas heat exchanger 5. The exhaust gas is then cooled to 80 to 120°C by the heat exchange performed in the exhaust gas heat exchanger 5. In contrast, the rich solution is further heated to 120 to 160°C, and the steam condensate is heated to 120 to 190°C.

The rich solution heated with the heat of the exhaust gas is fed to the regenerating section 18 of the absorbing solution regeneration column 16 through the rich solution supply line 57. The rich solution is preferably fed to the regenerating section 18 of the absorbing solution regeneration column 16 in the height where CO₂ loading of the solution when a part of the rich solution heated with the exhaust gas is flushed into the absorbing solution regeneration column 16 becomes generally equal to CO₂ loading of the solution present in the absorbing solution regeneration column 16.

The term "CO₂ loading" is herein defined as a ratio of CO₂ concentration to absorbing solution (amine) concentration (CO₂ concentration/absorbing solution (amine) concentration).

The exhaust gas treatment system 50 of the fourth embodiment uses the amount of heat of the exhaust gas to heat the rich solution and the steam condensate, so that the thermal efficiency of the entire apparatus is enhanced. Since the vaporized steam condensate is circulated to the reboiler 21, the amount of vapor fed to the reboiler 21 from the outside (boiler) can be decreased. Moreover, the rich solution is heated and fed to the absorbing solution regeneration column, so that the amount of vapor required for the reboiler 21 can be decreased.

Also in the exhaust gas treatment system of the present embodiment, the exhaust gas heat exchanger 5 is placed on the gas upstream side of the dry electrostatic precipitator 6, so that the removal efficiency of SO₃ and the removal rate of heavy metals in the exhaust gas treatment system are enhanced.

### <Fifth Embodiment>

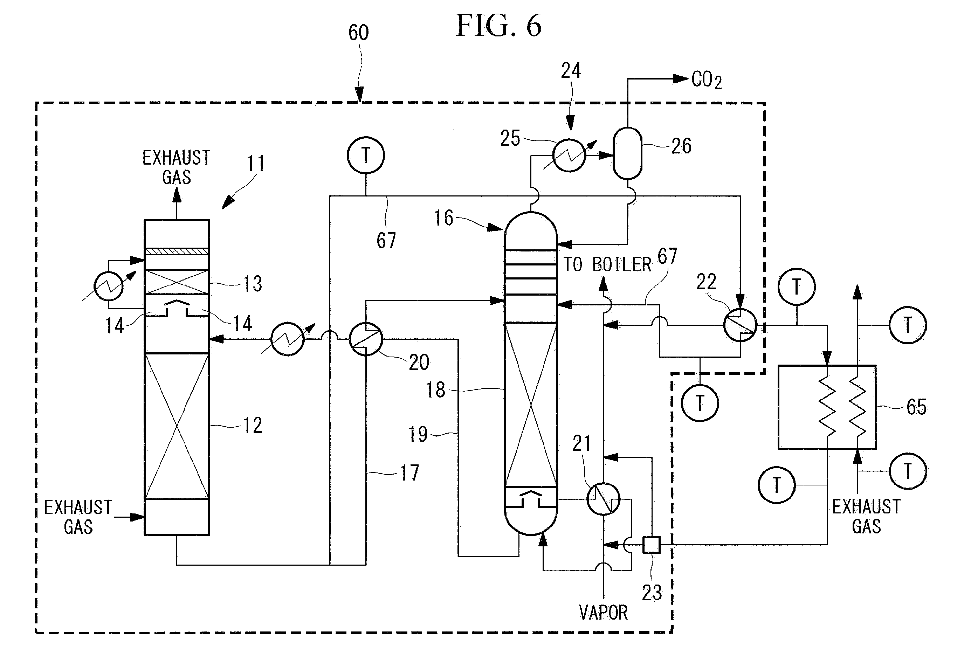

Fig. 6 is a schematic view for explaining a CO₂ recovery unit in an exhaust gas treatment system according to a fifth embodiment. In Fig. 6, structure components identical to those in Fig. 2 are designated by identical reference signs. The overall structure of the exhaust gas treatment system is identical to that of Fig. 1.

In a CO₂ recovery unit 60 in the fifth embodiment, a rich solution supply line branches into the rich solution supply line (first rich solution supply line) 17 and a rich solution supply line (second rich solution supply line) 67 on a rich solution upstream side of the rich/lean solution heat exchanger 20 as in the fourth embodiment. A part of the rich solution discharged from the CO₂ absorption column 11 is supplied to the heat exchanger 22 through the rich solution supply line 67, and then is supplied to the absorbing solution regeneration column 16 without passing through an exhaust gas heat exchanger 65.

In the heat exchanger 22, the heat exchange similar to that in the fourth embodiment is performed.

As shown in Fig. 6, the rich solution which passed through the heat exchanger 22 flows into the absorbing solution regeneration column 16 in generally the same height as the rich solution which passed through the heat exchanger 20. It should be noted that recovered heat of the rich solution which passed through the heat exchanger 22 can be utilized most effectively when the rich solution is fed to the absorbing solution regeneration column 16 in the height where CO₂ loading of the rich solution when a part of the heated rich solution is flushed into the absorbing solution regeneration column 16 becomes generally equal to CO₂ loading of the rich solution present in the absorbing solution regeneration column 16. Accordingly, the feed position of the rich solution is not limited to the one described in the forgoing. For example, the rich solution which passed through the heat exchanger 22 may be structured to be fed into the absorbing solution regeneration column 16 from the upper side or the lower side of the supply line of the rich solution which the passed through the heat exchanger 20 depending on the temperature difference between the rich solution which passed through the heat exchanger 22 and the rich solution which passed through the heat exchanger 20.

Since the exhaust gas treatment system 60 of the fifth embodiment uses the amount of heat of the exhaust gas to heat the steam condensate and the rich solution, the thermal efficiency of the entire apparatus is enhanced. Moreover, the vaporized steam condensate is circulated to the reboiler 21, so that the amount of vapor fed to the reboiler from the outside (boiler) can be decreased.

### {Example 1}

The amount of heat required for the reboiler in the case of treating exhaust gas with use of the exhaust gas treatment system including the CO₂ recovery unit shown in Fig. 2 was calculated. In the calculation, the pressure of the process condensate was set at 6 atm, the temperature thereof was set at 49°C at an inlet port of the heat exchanger, 82°C at an outlet port of the heat exchanger, and 149°C at an outlet port of the exhaust gas heat exchanger. The temperature of the steam condensate was set at 100°C at the inlet port of the heat exchanger. The temperature of the exhaust gas was set at 177°C at an inlet port of the exhaust gas heat exchanger and 90°C at the outlet port of the exhaust gas heat exchanger. The flow rate of the process condensate was set at 11.2 ton/hr, and the flow rate of the steam condensate was set at 20.3 ton/hr at the inlet port of the exhaust gas heat exchanger. The amount of heat was calculated in consideration of the enthalpy of the steam generated when the steam condensate was evaporated through heat exchange in the exhaust gas heat exchanger.

### {Example 2}

The amount of heat required for the reboiler in the case of treating exhaust gas with use of the exhaust gas treatment system including the CO₂ recovery unit shown in Fig. 3 was calculated. In the calculation, the temperatures of the process condensate, the steam condensate, and the exhaust gas were set at the same values as in Example 1. The flow rate of the process condensate was set at 11.2 ton/hr and the flow rate of the steam condensate was set at 20.3 ton/hr.

### {Example 3}

The amount of heat required for the reboiler in the case of treating exhaust gas with use of the exhaust gas treatment system including the CO₂ recovery unit shown in Fig. 4 was calculated. In the calculation, the temperature of the process condensate was set at 49°C at the inlet port of the heat exchanger and 96°C at the outlet port of the heat exchanger. The temperature of the steam condensate was set at 100°C at the inlet port of the heat exchanger. The temperature of the exhaust gas was set at 177°C at the inlet port of the exhaust gas heat exchanger and 90°C at the outlet port of the exhaust gas heat exchanger. The flow rate of the process condensate was set at 11.2 ton/hr, and the flow rate of the steam condensate was set at 36.1 ton/hr at the inlet port of the exhaust gas heat exchanger. The amount of heat was calculated in consideration of the enthalpy of the steam generated when the steam condensate was evaporated through heat exchange in the exhaust gas heat exchanger.

### {Example 4}

The amount of heat required for the reboiler in the case of treating exhaust gas with use of the exhaust gas treatment system including the CO₂ recovery unit shown in Fig. 5 was calculated. In the calculation, the pressure of the rich solution was set at 10 atm, and the temperature thereof was set at 39°C at the inlet port of the heat exchanger, 82°C at the outlet port of the heat exchanger, and 149°C at the outlet port of the exhaust gas heat exchanger. The temperature of the steam condensate was set at 100°C at the inlet port of the heat exchanger. The temperature of the exhaust gas was set at 177°C at the inlet port of the exhaust gas heat exchanger and 90°C at the outlet port of the exhaust gas heat exchanger. The flow rate of the rich solution was set at 12.0 ton/hr, and the flow rate of the steam condensate was set at 18.4 ton/hr at the inlet port of the exhaust gas heat exchanger. The amount of heat was calculated in consideration of the enthalpy of the steam generated when the steam condensate was evaporated through heat exchange in the exhaust gas heat exchanger.

### {Example 5}

The amount of heat required for the reboiler in the case of treating exhaust gas with use of the exhaust gas treatment system including the CO₂ recovery unit shown in Fig. 6 was calculated. In the calculation, the temperatures of the rich solution, the steam condensate, and the exhaust gas were set at the same values as in Example 4. The flow rate of the rich solution was set at 20.6 ton/hr, and the flow rate of the steam condensate was set at 31.6 ton/hr at the inlet port of the exhaust gas heat exchanger. The amount of heat was calculated in consideration of the enthalpy of the steam generated when the steam condensate was evaporated through heat exchange in the exhaust gas heat exchanger.

### {Comparative Example}

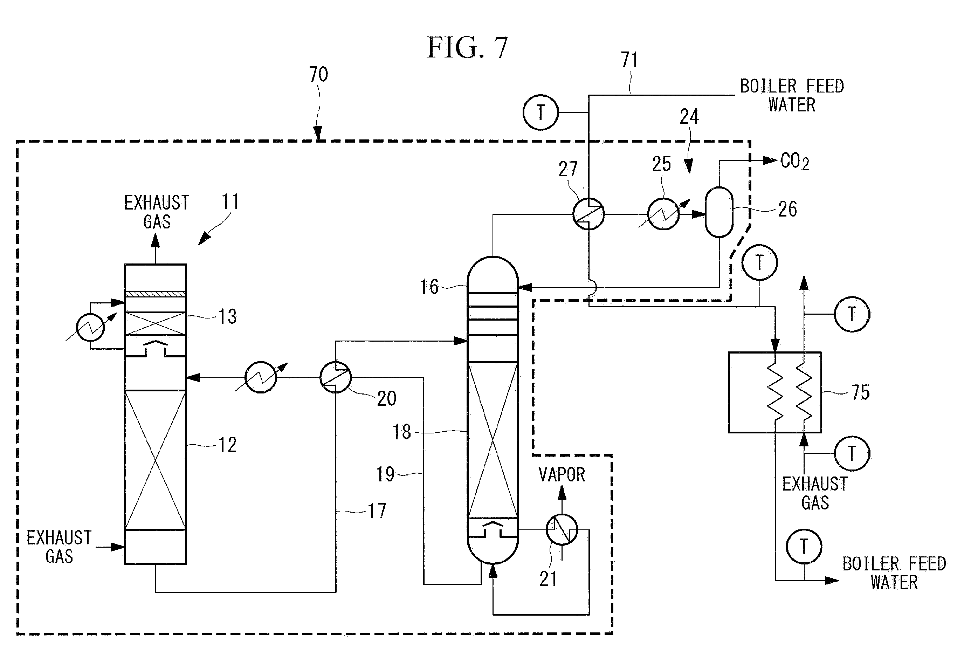

The amount of heat required for the reboiler in the case of treating exhaust gas with use of an exhaust gas treatment system including a CO₂ recovery unit shown in Fig. 7 was calculated.

In Fig. 7, structure components identical to those in Fig. 2 are designated by identical reference signs. In a CO₂ recovery unit 70 of Fig. 7, a heat exchanger 27 is placed on the gas upstream side of a condenser 25 in the CO₂ separation section 24. A boiler feed water pipeline 71 is placed so that cooled boiler feed water circulates to the boiler via the heat exchanger 27 of the CO₂ separation section 24 and an exhaust gas heat exchanger 75. However, the CO₂ recovery unit 70 of Fig. 7 is not structured to perform heat exchange of the process condensate and the rich solution with the steam condensate discharged from the reboiler, before supplying the process condensate and the rich solution to the absorbing solution regeneration column. Further, the CO₂ recovery unit 70 is not structured to heat the steam condensate in the exhaust gas heat exchanger and to circulate the heated steam condensate to the reboiler.

Heat exchange is performed, in the heat exchanger 27, between boiler feed water and CO₂ discharged from the absorbing solution regeneration column 16. Accordingly, the boiler feed water is heated and CO₂ is cooled. Next, in the exhaust gas heat exchanger 75, heat exchange is performed between the boiler feed water and exhaust gas. As a consequence, the boiler feed water is heated while the exhaust gas is cooled.

In the calculation, the temperature of the boiler feed water was set at 83°C at the outlet port of the heat exchanger and 174°C at the outlet port of the exhaust gas heat exchanger. The temperature of the exhaust gas was set at 177°C at the inlet port of the exhaust gas heat exchanger and 90°C at the outlet port of the exhaust gas heat exchanger. The flow rate of the boiler feed water was set at 31.6 ton/hr.

Table 1 shows ratios of heat amounts required for the reboiler in Examples 1 to 5 with reference to the calculation result of the Comparative Example.

**{Table 1}**

| | Example 1 | Example 2 | Example 3 | Example 4 | Example 5 |
|---|---|---|---|---|---|
| Ratio of required heat amount | 0.84 | 0.94 | 0.88 | 0.90 | 0.89 |

As shown in Table 1, the ratio of heat amount required for the reboiler decreased by feeding vapor from the boiler to the reboiler. That is, it was indicated that the exhaust gas treatment system including the CO₂ recovery unit of Examples has the thermal efficiency higher than that of the system including the CO₂ recovery unit of Comparative Example. Further, in Example 1 and Examples 3 to 5 which were structured so that the steam condensate was heated in the exhaust gas heat exchanger and was circulated to the reboiler, the ratio of required heat amount substantially decreased. This indicates that these Examples were more advantageous in the viewpoint of thermal efficiency.

In Example 2, the steam condensate was heated in the exhaust gas heat exchanger and was fed to the boiler, so that the thermal efficiency of the boiler was also enhanced.

### {Reference Signs List}

- 1: Exhaust gas treatment system
- 2: Boiler
- 3: NOx removal unit
- 4: Air heater
- 5, 45, 65: Exhaust gas heat exchanger
- 6: Dry electrostatic precipitator
- 7: Wet desulfurization unit
- 8: Smokestack
- 10, 30, 40, 50, 60: CO₂ recovery unit
- 11: CO₂ absorption column
- 12: CO₂ recovery section
- 13: Water washing section
- 14: Tray
- 15: Condensate supply pipeline
- 16: Absorbing solution regeneration column
- 17, 57, 67: Rich solution supply line
- 18: Regenerating section
- 19: Lean solution supply line
- 20: Rich/lean solution heat exchanger
- 21: Reboiler
- 22: Heat exchanger
- 23: Gas liquid separation unit
- 24: CO₂ separation section
- 25: Condenser
- 26: Separation drum

## Claims

1. An exhaust gas treatment system provided on a downstream side of a boiler which combusts fuel to heat water and generate water vapor, comprising:
a CO₂ recovery unit including:
a CO₂ absorption column for bringing exhaust gas containing CO₂ generated in the boiler into contact with a CO₂ absorbing solution so that the CO₂ absorbing solution absorbs the CO₂ and thereby the CO₂ is removed out of the exhaust gas;
an absorbing solution regeneration column for desorbing the CO₂ from the CO₂ absorbing solution which absorbed the CO₂ to regenerate the CO₂ absorbing solution; and
a reboiler for heating the CO₂ absorbing solution discharged from the absorbing solution regeneration column with water vapor and feeding the vaporized CO₂ absorbing solution to the absorbing solution regeneration column; and
an exhaust gas heat exchanger provided on a gas upstream side of the CO₂ recovery unit, wherein
the water vapor is supplied from the boiler to the reboiler, where heat exchange is performed between the CO₂ absorbing solution and the water vapor so that the water vapor is cooled into steam condensed water,
heat exchange is performed between the CO₂ absorbing solution discharged from the CO₂ absorption column and the steam condensed water discharged from the reboiler in a heat exchanger so that the CO₂ absorbing solution is heated while the steam condensed water is cooled,
the CO₂ absorbing solution heated in the heat exchanger is fed to the absorbing solution regeneration column, and
heat exchange is performed between the cooled steam condensed water and the exhaust gas in the exhaust gas heat exchanger so that the steam condensed water is heated while the exhaust gas is cooled.

2. The exhaust gas treatment system according to claim 1, wherein the CO₂ absorbing solution is process condensate discharged from a water washing section in the CO₂ absorption column.

3. The exhaust gas treatment system according to claim 1, wherein the CO₂ absorbing solution is a solution discharged from a bottom portion of the CO₂ absorption column.

4. The exhaust gas treatment system according to claim 1, wherein heat exchange is performed between the CO₂ absorbing solution and the exhaust gas in the exhaust gas heat exchanger so that the CO₂ absorbing solution is heated while the exhaust gas is cooled, and the heated CO₂ absorbing solution is supplied to the absorbing solution regeneration column.

5. The exhaust gas treatment system according to claim 1, wherein the steam condensate heated in the exhaust gas heat exchanger is supplied to the reboiler.

6. The exhaust gas treatment system according to claim 1, wherein the steam condensate heated in the exhaust gas heat exchanger is supplied to the boiler.
